# EUROPEAN PATENT APPLICATION

(11) **EP 0 630 634 A1**
(43) Date of publication of application: **28.12.1994**
(21) Application number: 94304378.6
(22) Date of filing: 16.06.1994
(51) Int. Cl.: A61G 5/00

(54) **Wheel chair**

(30) Priority: 22.06.1993 JP 38452/93; 25.05.1994 JP 133935/94
(71) Applicant: Nagasaki, Chikako, Shinjuku-ku, Tokyo (JP)
(72) Inventor: Nagasaki, Chikako, Shinjuku-ku, Tokyo (JP)
(74) Representative: Parry, Christopher Stephen

(57) **Abstract**

A wheel chair comprised of a frame 1 provided with a seat section 4 in which a user is seated, and wheels consisting of a pair of front wheels 10 and a pair of rear wheels 11, both rotatably attached to said frame 1, the wheels having rims 14 and tires 15 supported by the rims 14, the tires 15 being annular hollow objects made of an elastomer material that permit the tread of the tires to be deformed elasticity into a flat shape to ensure the movement of the wheel chair on soft or irregular surfaces, and the rims 14 being provided with flange sections 20 that permit the elasticity deformed sections of the tires 15 to be supported from the inside surfaces thereof.

## Description

The invention relates to a wheel chair used in daily life.

A known wheel chair is equipped with tires that, like those used for a bicycle, have a smaller tread and a large amount of tread pressure.

When, therefore, the known wheel chair travels on soft or irregular surfaces on turf, grass fields, sand beaches, dry riverbeds, graveled or snow-covered roads, trouble may occur such as damage to the turf, mechanical shocks to the user of the wheel chair caused by these irregular surfaces, tires being trapped in such irregular surfaces; the above trouble disables the movement of the wheel chair or forces the user thereof to stop moving it, thus greatly narrowing the scope of activities of the user.

Taking the above into consideration, it is an object of the present invention to provide a wheel chair capable of freely moving on soft or irregular surfaces on turf, sand beaches, or the like, hence expanding the scope of activities of the user. It is a further object of the invention to provide a wheel chair in which operability and safety are improved as to braking and backward tipping.

In order to achieve said objective, as is specified in Claim 1, the wheel chair of the present invention comprises a frame provided with a seat section in which a user is seated, and wheels consisting of a pair of front wheels and a pair of rear wheels, both rotatably attached to said frame, said wheels having rims and tires supported by said rims, said tires being annular hollow objects made of an elastomer material that permits the tread of said tires to be deformed elasticity into a flat shape to ensure the motion of the wheel chair on soft or irregular surfaces, said rims being provided with flange sections that permit the elasticity deformed sections of said tires to be supported by the inner surfaces of the rims.

The wheel chair of said claim 1, as is specified in Claim 2, is of a type which is operable with a helper's assistance, a type which is operable both by only the user and with a helper's assistance, and a type which is operable with an electric motor. Also, the wheel chair of Claim 1 wherein, as is specified in Claim 3, said frame is foldable or can be knocked down when the front and rear wheels are removed from the frame.

As is specified in Claim 4, the wheel chair of Claim 1 is equipped with a parking brake above the rear wheels, said parking brake member being provided so that it can freely move nearly horizontally and vertically, and said brake member, upon being lowered, being pressed on the upper parts of the pair of rear wheels on both sides to brake the revolution of the pair of rear wheels.

As is specified in Claim 5, the wheel chair of Claim 1 is provided with a backward tipping prevention at the back of the seat, the lower end of said backward tipping preventive section being disposed so that it can freely swing back and forth as a free end, said lower end member being directed toward the direction of gravity.

When the wheel chair of Claim 1 travels on soft or irregular surfaces on turf, sand beaches, and the like, its tires, being annular hollow objects made of an elastomer material, are elasticity deformed into a flat shape on the tread to ensure the travel. Therefore, the tires are given not only adequate shock absorbing ability but also an enlargement of the tread area, resulting in a greater distribution of the load to support (a reduced tread pressure), thereby making it possible to prevent damage to turf, mechanical shocks to the user due to irregularities of these surfaces, or the tires from being trapped in these surfaces. As described in Patent Application Laying-open No.SHO-061-501384, the tires installed on said wheel chair are specially molded anticipating that the tread is elasticity deformed into a flat shape; with the tires being expected to be thus elasticity deformed, the rims are provided from the beginning with a flange section to support the tires effectively from the inner surface of the rim.

The wheel chair of the present invention, which is characterized by the above features in regard to the structure of the wheels, a type which is operable with a helper's assistance, a type operable either by only the user or with helper's assistance, or a motorized type operable with an electric motor as specified in Claim 2. The wheel chair of the type which is operable either by only the user or with helper's assistance, among the above types, is chiefly designed to move using a lever used by the user himself, and additionally it is capable of moving with a helper's assistance as described below in details. The motorized wheel chair moves by the control switch on the electric motor device such as an electric motor, which can be operated by the user or helper.

As described in Claim 3, the storage and transportation of said wheel chair are extremely simple as the frame is foldable or can be knocked down when the rear wheels are removed from the frame or both front and rear wheels are removed from the frame. The fact that transporting it is simple allows, among other things, said wheel chair to be transported anywhere by being loaded into a private vehicle or a similar class of vehicle. This is the first aim of the present invention, directly contributing to the expansion of the range of user's activities.

The wheel chair of Claim 4 allows the parking brake to be applied with an extremely simple operation by lowering the parking brake and pressing it on the upper parts of the rear wheels to brake the revolution of the pair of the rear wheels. The tires are characterized by the fact that the extremely high elasticity of the tires as described above has enabled the provision of such a parking brake as above, and the simple construction of the parking brake as above will rarely fail, while it is easily ascertained at a glance that the parking brake is applied.

The wheel chair of Claim 5 wherein when said wheel chair is going to tip over backward, the backward tipping prevention section works as a "prop" stopping the wheel chair while tipping. The installation of said backward tipping prevention part indicates that the present invention is intended to provide a wheel chair that the user can make active use of, while said wheel chair has been improved in ensuring its safety in order to prevent possible danger resulting from the improved mobility of the wheel chair.

In the following, a preferred embodiment of the present invention is described according to the attached drawings:

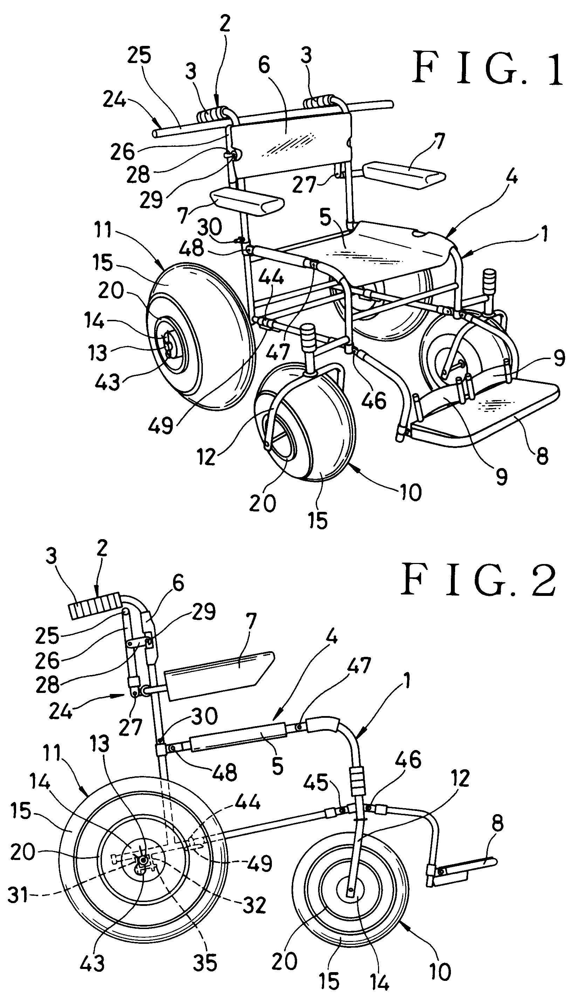

As illustrated in Figs. 1 and 2, the wheel chair of the present invention is provided, first, with a frame consisting of metal or polyvinyl chloride pipes, or the like, the entirety of which is designated by Symbol 1; the frame 1 is provided with a handle section 2 to be gripped by the helper and a seat section 4 in which the user is seated. The handle section 2 is provided with a pair of hand grips 3 on both sides, which enable the helper, gripping these hand grips 3, to push or pull the wheel chair, thereby moving it forward and backward or in other directions. Said wheel chair is a wheel chair exclusively for use with a helper, predetermined to be moved always by a helper, but not by the user seated in the seat section 4. The seat section 4 is provided with a seating sheet 5 and a back sheet 6, both of which are detachable and washable, a pair of folding arm rests 7 on both sides, a folding foot rest 8 provided with a pair of heel belts 9 on both sides.

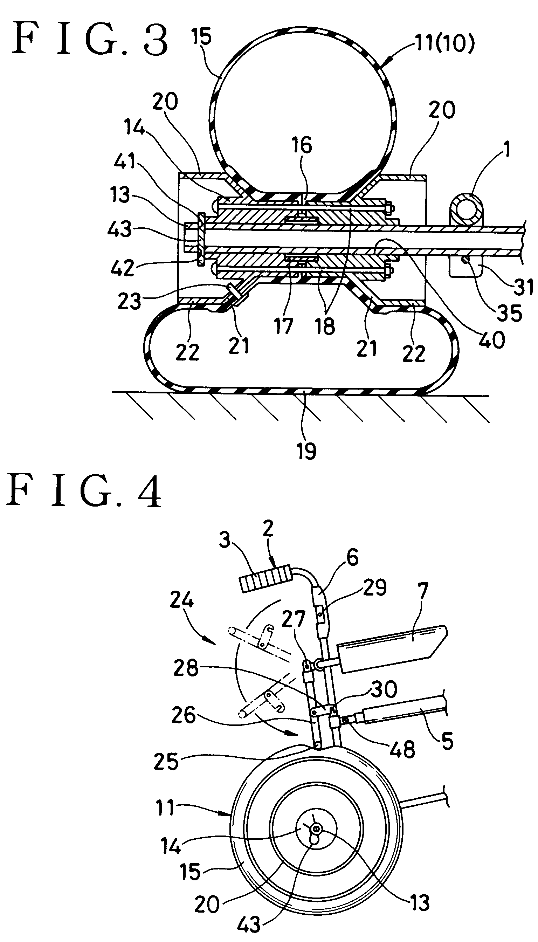

Said wheel chair is provided with a pair of front wheels 10 on both sides and a pair of rear wheels 11 on both sides. The front wheel, having a diameter of approximately 320 mm, is supported independently on each side by the front wheel support section 12 on the frame 1, and capable of changing directions (rotating to change directions) in a 360 degree range as viewed from above. The rear wheels 11, having a diameter of approximately 440 mm, are attached to both ends of an axle 13 rotatably attached to the frame 1. As shown in Fig.3, each of both front wheels 10 and rear wheels 11 are provided with a rim 14 and a tire 15 supported on the outer surface of the rim 14. The tire 15 consists of an annular hollow object made of an elastomer material (for example, 30% EPDM rubber containing black pigments made from furnace soot, or high strength and elastic plastic raw material having a strength of 65 kg/cm² and an elongation percentage of 425%), with its laminated section 16 (lapped sections) prepared on the inner surface being interposed between axially bisected rims 14 to keep the tire inside airtight. Symbols 17 and 18 denote spacers and fastening units, respectively. In addition, since this tire 15 allows its tread 19 to be deformed elasticity into a flat shape to ensure the movement of the wheel chair on soft or irregular surfaces on turf, sand beaches, and the like, each axial end of the rim 14 is provided with a flange section 20 consisting of a combined shape of the tapered section 21 and the cylindrical section 22. The rim 14 is made of a plastic material. Symbol 23 denotes an inflation valve consisting of a needle valve or the like for pumping air into the tire 15, and through this inflation valve 23, air is pumped into the tire 15 at low pressures of up to 10 psi (0.7 kg/cm²). For reference, the thickness of the elastomer material of the tire 15 is approximately 3 mm.

When the user, seated on the seat section 4 of the wheel chair of above structure and assisted by the helper, rides on soft or irregular surfaces on turf, sand beaches, and the like, the tire 15 allows the tread 19 to be deformed elasticity into a flat shape, as shown in Fig. 3, to ensure the motion of the wheel chair, being given not only adequate shock absorbing property but also enlargement of the area of the tread 19, resulting in dispersion of the load to support (a reduced tread pressure). This makes it possible to prevent a tire 15 from damaging turf, these irregular surfaces from delivering mechanical shocks to the user, or the tires 15 from being trapped in these surfaces, thereby expanding the scope of user's activities as enumerated in the following examples:
a) Moving on turf or paths covered with dead leaves in parks, grass fields, or forests.
b) Strolling on shorelines.
c) Strolling on dry riverbeds.
d) Participating in shellfish-gathering.
e) Participating in bird watching activities.
f) Strolling on snowy roads on which walking is possible.
g) Playing golf on a golf course, or watching golf tournaments.

Enjoying these possibilities means that the wheel chair of the present invention enables the user to enjoy nature, go out with the user's family members or friends, or actively participate in leisure activities unimaginable with wheel chairs until now. Psychologically, it is a great joy for the user, and for the helper it greatly reduces the burden of help. In addition, the four wheels consisting of a pair of front wheels 10 and a pair of rear wheels 11, when given suitable dimensions, can float said wheel chair on the water by means of their buoyancy, further enlarging the scope of user's activities.

Said wheel chair is provided with a parking brake member 25 as an additional characteristic structure. Precisely speaking, as shown in Figs. 1, 2 and 4, a parking brake section 24 is provided above a pair of rear wheels 11, and a bar-shaped brake section 25 having a length nearly equal to the width of the wheel chair is disposed nearly horizontally above a pair of rear wheels 11 on both sides; the parking brake member 25 is attached to the frame 1 through the two support members 26 fixed to said brake member 25 nearly at right angles so that it may swing (vertical movement) in a range of approximately 180 degrees in both upward and downward directions round the fulcrum 27; when they are lowered, they are pressed simultaneously on the upper parts of the rear wheels on both sides, causing the upper parts of the rear wheels 11 on both sides to be dented simultaneously, thereby the rotation of the rear wheels 11 on both sides is restricted simultaneously. Metal pipes are preferred as a material for the brake member 25. The operating procedures of the wheel chair are as follows:
1) Starting from the condition as illustrated in Figs. 1 and 2, rotate the rotary lock members 28 rotatably attached on the support members 26 and remove said lock members 28 from the pin-like first engagement protrusion sections 29 protruding on the frame 1.
2) Rotate the parking brake 25 downward by about 180 degrees as shown with the arrow in Fig.4, and press it simultaneously on the upper parts of the rear wheels 11 on both sides.
3) Rotate the lock members 28 again and engage these locks 28 with the pin-like second engagement protrusion sections 30 protruding on the frame 1.

The above described steps 1. through 3. are the procedures for applying the parking brake, while the procedures are reversed to release the parking brake. The installation of a parking brake 25 like the one described above provides the following action and effect.
A) The operation to apply the parking brake or to release the parking brake is extremely simple, since the parking brake 25 is required only to swing vertically.
B) Braking can be securely applied with a high safety factor, because the parking brake member 25 is directly pressed on the upper parts of the tires 15 to dent the tires 15, taking advantage of a large amount of elasticity of the tires 15, and thereby the rotation of the rear wheels 11 is restricted simultaneously on both sides.
C) Since the structure is simple, said wheel chair seldom fails and is not adversely affected by, in particular, water, sand, and the like.
D) Since it is possible to ascertain that the parking brake is set by only checking that the parking brake member 25 is set at an upper position or at a lower position, it is easy to prevent incorrect operation before it occurs.
E) Since bags, towels, or the like can be hung on the parking brake 25 at its upper position as illustrated in Figs. 1 and 2, the parking brake 25 can be used as a hanger.

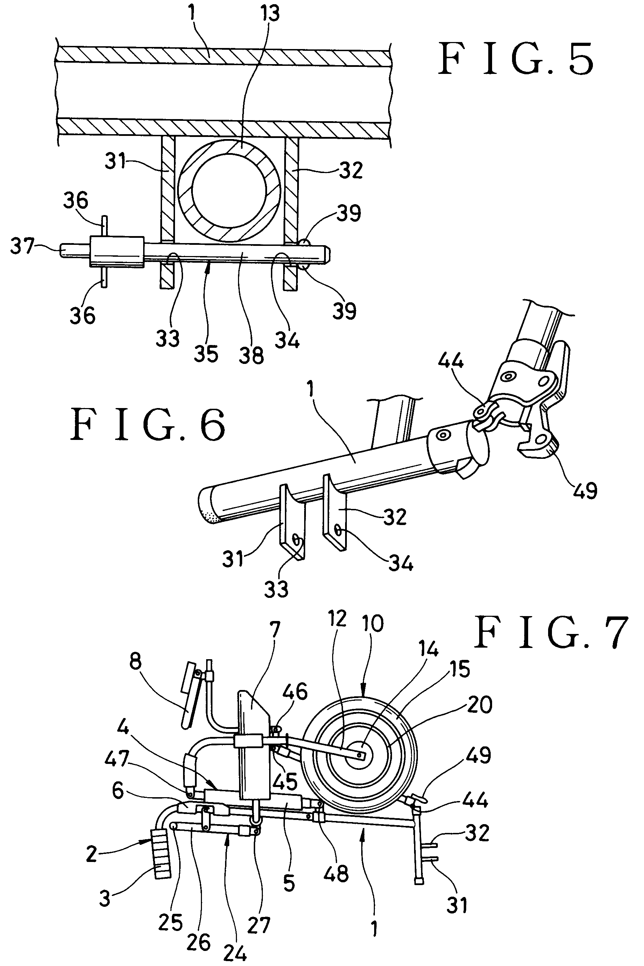

Said wheel chair has another characteristic of the construction wherein the frame 1 can be folded with both rear wheels 11 removed from the frame 1 for convenient storage and transportation. The axle 13 and the rear wheels 11 on both sides are removed together from said wheel chair in the condition as illustrated in Figs. 1 and 2, and then the rear wheels 11 on both sides are removed from the axle 13, and the frame 1 is folded. The procedure and its structure are as follows:
1) The axle 13 is rotatably and detachably attached to the frame 1 as arranged in Fig. 5. In other words, a pair of flange pieces 31 and 32 are disposed on both sides of the frame 1, respectively; these flange pieces 31 and 32 are provided coaxially with insertion holes 33 and 34; a pin-shaped lock 35 is inserted through the insertion holes 33 and 34 so as to close the opening section between the flange pieces 31 and 32; the axle 13 is rorotatably supported while being surrounded by the frame 1, flange pieces 31 and 32 and lock 35. The pin-shaped lock member 35 is arranged so that, when the head section 37 is pushed into the main body 38 using the thumb with index and middle fingers placed on the finger holders 36 on the base end, a pair of engagement protrusions 39 on the tip will be pulled back into the main body 38, while when the head section 37 is released from being pressed by the thumb and returns to the original position, a pair of the engagement protrusions 39 will come out of the main body 38; in this manner the opening section between the flange pieces 31 and 32 is closed by inserting the lock section 35 into the insertion holes 33 and 34 or opened by pulling back the lock section 35 from the insertion holes 33 and 34 with the engagement protrusions 39 being pulled inside the main body 38. Thus, the operation starts from opening the opening section between the flange pieces 31 and 32 by pulling this lock member 35 from the insertion holes 33 and 34, and the axle 13 installed with the rear wheels 11 on both ends is removed downward through the opening section .
2) Furthermore, as shown in Fig. 3, the axle 13 is inserted through the axle hole 40 of the rim 14 of the rear wheel 11, and is prevented from being pulled out from the rim 14 by inserting the spring-shaped lock member 43 into a pair of insertion sections 41 and 42 disposed at the end of the axle 13. The second step of the operation, therefore, consists of pulling out this lock member 43 from the insertion sections 41 and 42 and removing each of the rear wheels 11 on both sides of the axle 13.
3) The frame 1 consists of a combination of a number of metal or polyvinyl chloride pipes, and is provided with rotatable joints (links) at the locations indicated by Symbols 44, 45, 46, 47, and 48 in Fig. 1. In addition to this, the arm rests 7 and the foot rest 8 are, as described above, of a folding type or a detachable type. When, therefore, the lock mechanism 49 disposed on a joint 44 as shown in Fig. 6 is unlocked to rotate the joints 44, 45, 46, 47, and 48 and the arm rests 7 and the foot rest 8 are folded away (the foot rest 8 may be removed in advance) , the frame 1 can be folded to the one shown in Fig.7. The third step of the operation, therefore, consists of folding the frame 1 into the flat form as above.

The steps of the operation 1. through 3. described above are intended for folding of said wheel chair, whereas the steps for assembly of said wheel chair are in reverse order. Since said wheel chair is foldable as described above, said wheel chair can be easily stored, transported and loaded into a vehicle, enabling the user to perform the outdoor activities as enumerated in a through g much more easily.

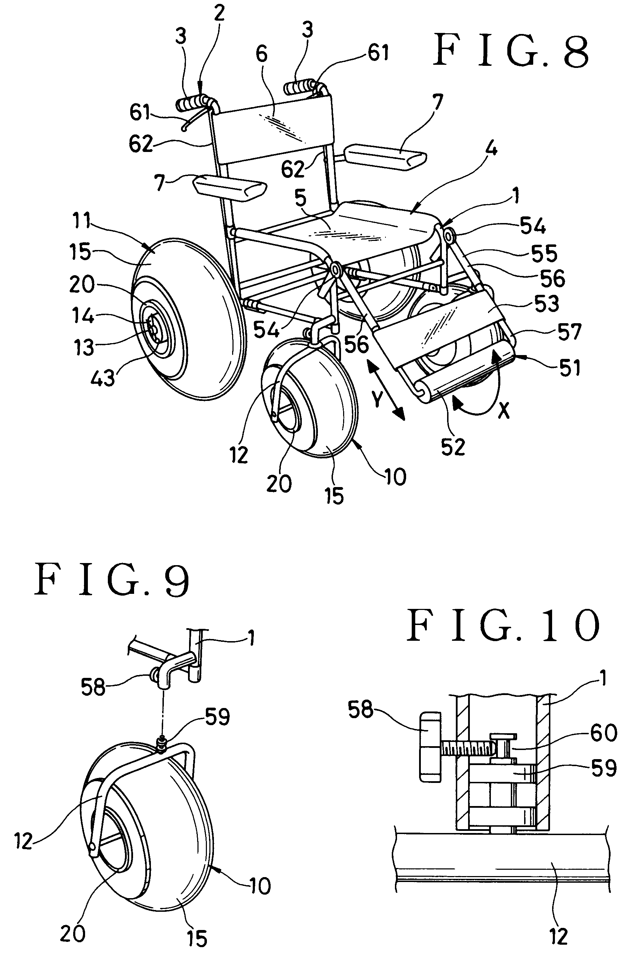

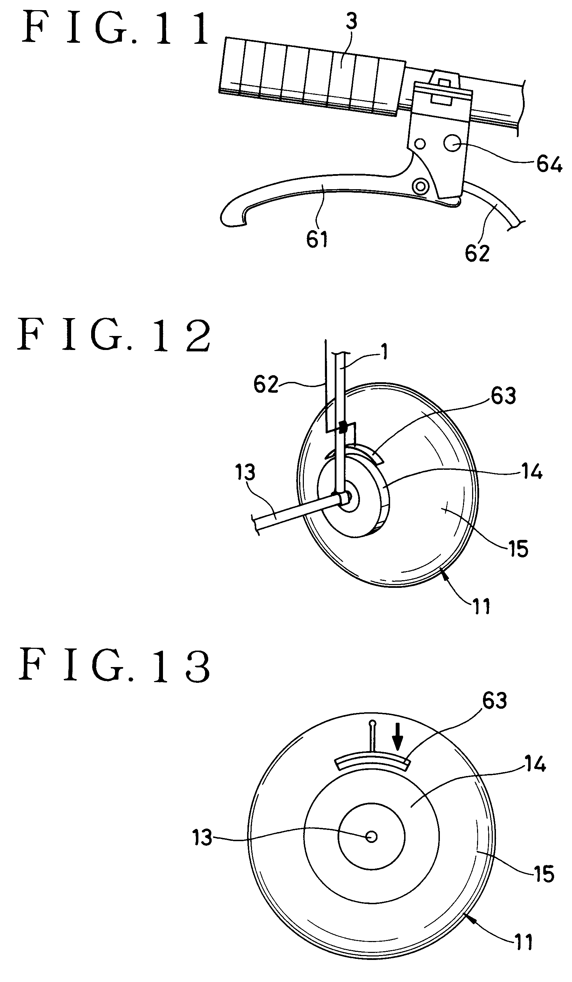

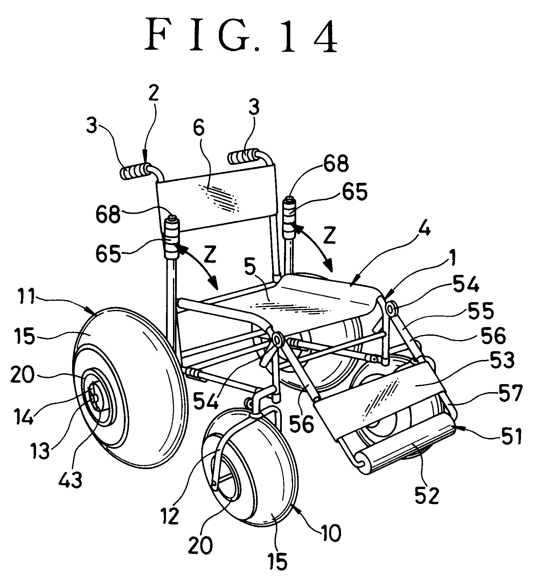

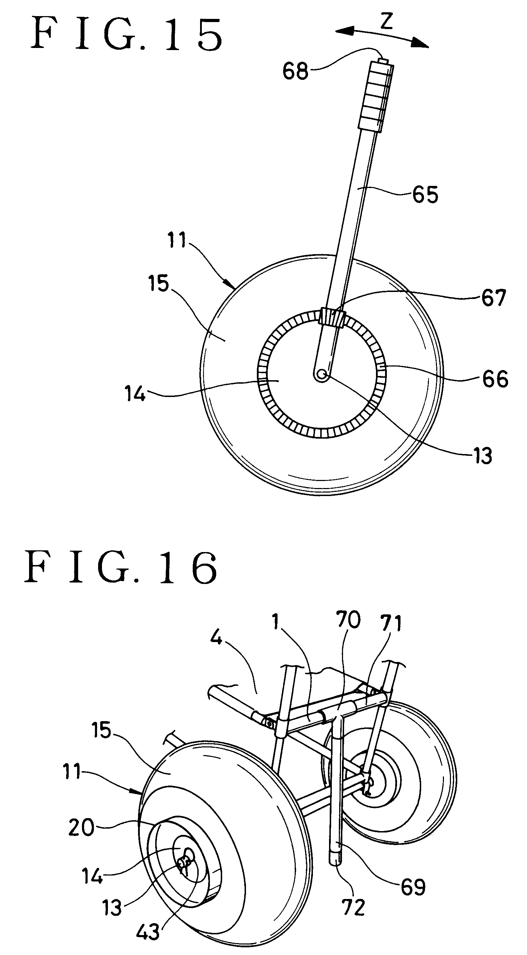

Also, the wheel chair as arranged above can be added or modified in its arrangement as stated below.
A) As shown in Fig. 8, the wheel chair is provided with a different type of foot rest section 51 consisting of a nearly cylindrical foot rest 52 made of hard urethane and a sheet of leg rest 53. The foot rest section 51 is connected to the seat section 4 with a pair of hinges 54 on both sides, allowing it to swing vertically, its set angle being adjustable (as indicated with the arrow X); the frame section 55 consisting of a combination of large and small pipes 56 and 57 (the pipe 57 having a small diameter can be inserted into and pulled out of the end of the pipe 56 having a large diameter which is located close to the seat section 4) can be telescopically extended and shortened to the forward or backward direction, making the distance from the seat section 4 to the foot plate 52 adjustable (as indicated with the arrow Y). The hinges 54 are of a ratchet type.
B) Not only the rear wheels 11 but also the front wheels 10 is set to be removable from the frame 1. As shown in Fig. 9, the front wheel supporting sections 12 on both sides which support the front wheels 10 are arranged to be detachable from the frame 1, respectively; as shown in Fig. 10, the front wheel supporting section 12 is set to be detachable from the frame 1 by turning the knob 58 loose to remove its male threaded section from the annular engagement dent section 60 provided on the upper section of the bearing 59.
C) The wheel chair is arranged to be available for knockdown, not for folding the frame 1 after the front wheels 10 and rear wheels 11 are removed from the frame 1. In other words, as shown in Fig. 9, the frame 1 is disassembled into the back upholstery section ranging from the handle section 2 through the bearing section of the axle 13, seat section 4 and foot rest section 51 after the front wheel supporting sections 12, front wheels 10, axle 13, rear wheels 11, and a pair of arm rests 7 are removed from the frame 1.
D) As shown in Drawings 8 and 11, a pair of brakes in a handgrip type are provided to be operated by the helper. A brake lever 61 is provided under each of the handgrips 3 on both sides of the handle section 2; as shown in Figs. 12 and 13, when the helper grips the brake lever 61, the brake shoe 63 comes into contact with pressure with the outer surface of the rim 14 or flange section 20 through a wire 62, and thereby the rotation of the rear wheel 11 is braked by frictional force. Also, when the lock button 64 provided on the brake lever 61 is pressed while the brake lever 61 is gripped, the brake remains applied even if the brake lever 61 is released, and thus the brake lever 61 also functions as a parking brake; when the lock button 64 is pressed again, the brake is released.
E) Said wheel chair is a wheel chair of a type both for self- driving or for driving with a helper wherein said wheel chair is driven by a user's own operation or with the help of a helper. As shown in Fig. 14, a pair of hand levers 65 are provided on both sides of the seat section 4; as the user himself sitting on the seat section 4 swings back and forth, the hand levers 65 gripped by his hands (indicated by the arrow Z), the rear wheel 11 at the right hand rotates by the hand lever 65 at the right hand and at the same time the rear wheel 11 at the left hand rotates by the hand lever 65 at the left hand, and in this way said wheel chair is set to be capable of being driven without the aid of a helper. In order to convert the swing caused by manual swing operations using the hand lever 65 to the rotation of the rear wheel 11, a linkage device using gear engagement is provided on the inside of each of the rear wheels 11 as shown in Fig. 15.

That is to say, the ring gear 66 manufactured separately is fixed on the rim 14 or flange section 20 located inside of the rear wheel 11; the hand lever 65 swings round the axle 13; the ratchet gear 67 capable of engagement with the ring gear 66 is provided to the hand lever 65; and thus each time when the hand lever 65 is thrown forward (advance movement) to advance said wheel chair, torque is transmitted to the rear wheel 11 to rotate it forward. When the hand lever 65 returns, the ratchet gear 67 idles; and when the hand lever 65 stops swinging during advance movement, the ratchet gear 67 idles as well and said wheel chair continues moving by inertia. When the change-over button 68 provided on the hand lever 65 is pressed, the engagement of the ratchet gear 67 is reversed through a linkage shaft or wire (none is illustrated) arranged through the inside of the hand lever 65; each time when the hand lever 65 is thrown forward (advance movement) under this condition, torque is transmitted to the rear wheel 11 to rotate it backward. In addition, pressing this button 68 during advance movement by inertia performs the brake function by the user's muscular strength. Also, in the case where the user himself does not drive said wheel chair but said wheel chair is driven with the help of a helper, the hand levers 65 on both sides are pulled down to the dead end position so that the rear wheels 11 are totally freed by the release of the engagement of the ratchet gears 67 with the ring gears 66. At this time, each of the hand levers 65 on both sides is recommended to be confined by the anchoring hook (not illustrated) provided on the side of the frame 1 to prevent it from swinging freely.
F) Said wheel chair is a wheel chair driven by an electric motor device (not illustrated).
G) As shown in Fig. 16, a backward tipping prevention section 69 consisting of nearly T-shaped piping material is provided at the back of the seat section 4. That is to say, this backward tipping prevention section 69, wherein the upper end of the horizontal piping section 70 is rorotatably inserted over the piping member 71 of the frame 1, is provided in suspension allowing it to swing freely in both forward and backward directions with the lower end 72 being a free end which normally does not contact the ground, and at the same time, the lower end 72 is normally directed to the direction of gravity, and thus, when said wheel chair loses balance and is about to tip backward, this backward tipping prevention member 69 will contact the ground and act as a prop, stopping it in the midst of tipping.
H) The installation of a net or chain (none is illustrated) on each of the front wheels 10 and rear wheels 11 can improve the anti-skid effect on snow.
I) Conventional narrow wheel chair tires having a large tread pressure and front wheel casters may be necessary to use on hard floors of buildings, asphalt pavements, and the like. It is, therefore, recommended that the front wheels 10 and the rear wheels 11 are replaceable with these tires or casters, respectively.

The present invention has the following effects.

In the first place, the wheel chair of Claim 1, wherein the wheel chair provided with the wheels consisting of the front wheels and rear wheels as arranged above can move freely on soft or irregular surfaces on turf, grass fields, sand beaches, dry riverbeds, graveled or snow-covered roads, can expand the scope of user's activities.

The wheel chair of Claim 2, wherein a user or a helper can choose any wheel chair having the above effects as needed or depending on the circumstance from the wheel chair exclusively for use with a helper, wheel chair available for use both by user and with a helper, and electric wheel chair.

In addition, the wheel chair of Claim 3 can directly contribute to the expansion of the scope of user's activities, because the wheel chair having the above effects has become extremely simple to store and to transport, and particularly easy to load into a vehicle.

The wheel chair of Claim 4 has the following effects:
A) The operation of applying the parking brake or releasing the parking brake is extremely simple, since only a vertical movement of the parking brake is required.
B) The application of the brake is reliable and highly safe, because, taking advantage of the large amount of elasticity of the tire, the tire is dented by pressing the parking brake directly on the upper part of the tire, and thereby the revolution of the tire is restricted, the action on both tires being simultaneous.
C) Since the structure is simple, said wheel chair seldom fails and is not adversely affected by water, sand, and the like.
D) Since it is possible to ascertain the application of the parking by merely checking that the parking bake is set at an upper position or at a lower position, it is easy to prevent incorrect operation before it occurs.
E) Since bags, towels, or the like can be hung on the parking brake when it is set at an upper position, the parking brake can be used as a hanger.

The wheel chair of Claim 5, wherein said wheel chair can be prevented from tipping backward, thereby enhancing the safety of said wheel chair.

In the drawings:
Fig. 1 is a perspective view of the wheel chair of the first embodiment of the present invention;
Fig. 2 is a side view of said wheel chair;
Fig. 3 is a sectional view of the wheel
Fig. 4 is an explanatory drawing of the movement of the parking brake member;
Fig. 5 is an explanatory drawing of the installation arrangement of the axle;
Fig. 6 is an explanatory drawing of the folding arrangement of the frame;
Fig. 7 is a side view of the folding condition of the frame;
Fig. 8 is a perspective view of the wheel chair related to the second embodiment of the present invention;
Fig. 9 is an explanatory drawing of the condition of the removed front wheel;
Fig. 10 is an explanatory drawing of the removal arrangement of the front wheel;
Fig. 11 is an explanatory drawing of the brake arrangement;
Fig. 12 is an explanatory drawing of the brake arrangement;
Fig. 13 is an explanatory drawing of the brake arrangement;
Fig. 14 is a perspective drawing of the wheel chair related to the third embodiment of the present invention;
Fig. 15 is an explanatory drawing of the linkage arrangement between the hand lever and the rear wheel;
Fig. 16 is an explanatory drawing of the backward tipping prevention section.

### (Explanation of Numerical Symbols)

1. Frame
2. Handle section
3. Handgrip
4. Seat section
5. Seating sheet
6. Back sheet
7. Arm rest
8, 52 Foot rest
9. Heel belt
10. Front wheel
11. Rear wheel
12. Front wheel supporting section
13. Axle
14. Rim
15. Tire
16. Laminated section
17. Spacer
18. Fastener
19. Tread
20. Flange section
21. Tapered section
22. Cylindrical section
23. Inflation valve
24. Parking brake section
25. Brake member
26. Support member
27. Fulcrum
28, 35, 43 Lock member
29, 30 Engagement protrusion section
31, 32 Flange piece
33, 34 Insertion hole
36. Finger holder
37. Head section
38. Main body
39. Engagement protrusion
40. Axle hole
41, 42 Insertion section
44, 45, 46, 47, 48 Joint
49. Lock mechanism
51. Foot rest
53. Leg rest
54. Hinge
55. Frame section
56, 57, 70, 71 Pipe
58. Knob
59. Bearing
60. Engagement dent section
61. Brake lever
62. Wire
63. Brake shoe
64. Lock button
65. Hand lever
66. Ring gear
67. Ratchet gear
68. Change-over button
69. Backward tipping prevention section
72. Lower end

## Claims

1. A wheel chair, comprised of a frame provided with a seat section in which a user is seated, and wheels consisting of a pair of front wheels and a pair of rear wheels, both rotatably attached to said frame, said wheels having rims and tires supported by said rims, said tires being annular hollow objects made of an elastomer material that permits the tread of said tires to be deformed elasticallyinto a flat shape to ensure the movement of the wheel chair on soft or irregular surfaces, and said rims being provided with flange sections that permit the elastically deformed sections of said tires to be supported from the inside surfaces thereof.

2. The wheel chair of Claim 1 wherein said wheel chair is characterized by a type which is operable with a helper's assistance only, a type which is both user operable and with a helper's assistance, and a type which is operable with an electric motor.

3. The wheel chair of Claim 1 wherein said frame of said wheel chair is foldable or can be knocked down when the rear wheels are removed from the frame or the front and rear wheels are removed from the frame.

4. The wheel chair of Claim 1 wherein a parking brake member is disposed above rear wheels, said parking brake being set so that it can freely move nearly horizontally and vertically, and said brake, upon being lowered , being pressed on the upper parts of the pair of rear wheels on both sides to brake the revolution of the pair of rear wheels.

5. A wheel chair of Claim 1 wherein a backward tipping prevention section is provided at the back of the seat, the lower end of said backward tipping prevention member being disposed so that it can freely swing back and forth as a free end, said lower end member being directed toward the direction of gravity.
